# EUROPEAN PATENT APPLICATION

(11) **EP 2 133 191 A2**
(43) Date of publication of application: **16.12.2009**
(21) Application number: 08736722.3
(22) Date of filing: 03.03.2008
(51) Int. Cl.: B29C 65/08

(54) **ULTRASONIC HEAD AND TRANSDUCER FOR ULTRASONIC SOLDERING OF PLASTICS**

(30) Priority: 02.03.2007 ES 200700604
(71) Applicant: Compañía Española De Ultrasonidos, SA, 08950 Esplugues de Llobregat (ES)
(72) Inventor: SANS MARIMON, Joan, E-08950 Esplugues de Llobregat (ES)
(74) Representative: Gislon, Gabriele
(86) International application number: PCT/ES2008/000120
(87) International publication number: WO 2008/090251

(57) **Abstract**

The invention comprises an ultrasonic transducer (1) to which there is coupled a sonotrode (2) or an end part with a portion functioning as a sonotrode, provided to vibrate according to a direction which can be oriented in relation to a working surface where there are plastics to be welded arranged under a free end (2a) of the sonotrode (2), the sonotrode (2) internally defining a first conduit (3) for the circulation of a cooling fluid and which exits to the exterior through the free end (2a), and said head (C) having a fluid supply connection (4).

It comprises a second conduit (30) communicating the first conduit (3) with the connection (4), with an inlet (30e) arranged above the sonotrode (2) or the portion functioning as a sonotrode of the end part.

## Description

### Field of the Art

The present invention relates to the welding by ultrasonic vibration of plastic parts, generally comprising thermoplastics, mixtures of plastics and plastic with filler.

In a first aspect, the invention generally relates to a head for the ultrasonic welding of plastics which allows internally cooling at least one sonotrode connected to an ultrasonic transducer of said head and the welding area of said plastics, and particularly to a head with an arrangement of cooling conduits which allows working at high frequencies and at large oscillation amplitudes without the end part forming or including one or more sonotrodes suffering any damage.

A second aspect of the present invention relates to an ultrasonic transducer with a cooling conduit running through its inside and adapted to be coupled to one or more parts for assembling a head for the ultrasonic welding of plastics with internal cooling and cooling of the welding area arranged under it.

### Prior State of the Art

Patent US3438428, in the public domain, discloses a method for maintaining a vibratory tool at a controlled temperature. For one embodiment, said vibratory tool is applied to the welding of plastics by means of a sonotrode moving in a direction perpendicular to the working surface of the tool and generally perpendicular to said plastics to be welded. For the purpose of performing the mentioned temperature control, there is defined in said sonotrode a conduit which at least comprises a segment parallel to the working surface, and a cooling fluid is circulated through the inside of said conduit. Both ends of said conduit are connected to two pipes of a respective circuit outside the sonotrode, one of them, the inlet end, to a source for supplying said fluid, and the other one, the outlet end, to a reservoir, for example, from which the fluid is again extracted by means of a pump to be recirculated through the conduit of the sonotrode.

Said patent US3438428 neither teaches nor suggests the possibility of also cooling the welding area of the plastics or an outer face of the sonotrode by means of the cooling fluid circulating inside it.

In addition, patent US6691909 relates to an apparatus for the ultrasonic welding of metals of the resonant reed and wedge type, wherein a wedge which is directly connected to the ultrasonic transducer (operating as sonotrode) is attached to a reed fastened at one of its ends and supported at the other end on the workpieces, placed against one another and pressed, rubbing on such workpieces. For the purpose of preventing the tip of the mentioned reed, referred to as sonotrode, from being adhered to the metal which is being welded, this device comprises, for one embodiment, a conduit which in its portion closest to said tip has a capillary section so that a fluid contained in the conduit only exits to the exterior through said tip when the sonotrode is vibrated. The sonotrode is thus moved in a direction parallel to the working area, i.e., to the metal materials to be welded, by means of the action of a transducer to which the mentioned wedge is coupled, to which wedge the reed finished in the sonotrode is fixed, such that the longitudinal vibration of the transducer translates into a transverse vibration of the sonotrode, the latter sliding on the face of the upper workpiece of the pair of workpieces to be welded.

Said US6691909 also proposes internal cooling systems for the sonotrode similar to those proposed in patent US3438428, i.e., formed by conduits inside the sonotrode which do not have an outlet to the exterior, since their only purpose is to cool the inside of the sonotrode.

The problem set forth in said patent US6691909, i.e., preventing the tip of a sonotrode from being adhered to the material which is being welded, is only relevant for welding metals, and is not applicable to welding plastics.

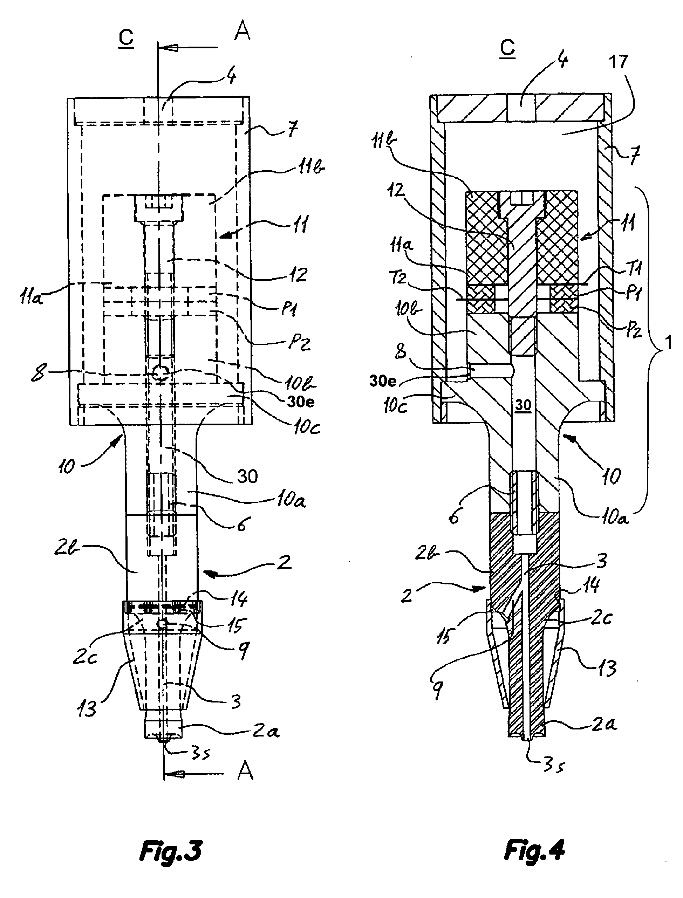

Patent application EP 1 000 732 describes an apparatus for the ultrasonic welding of resin fastening elements, claim 5, Figure 3 and the corresponding description of which propose the formation of a passage for air defined through a portion of the sonotrode, one of the uses of which is to inject air through a side pipe transversely defined in the sonotrode itself for the purpose of cooling the welded area.

It is well known in the field of the art of the present invention that for an ultrasonic welding head to be able to work, i.e., vibrate, each of its parts must go into resonance at the frequency of the ultrasonic vibration generated by the ultrasonic transducer, for which each of said parts (i.e., sonotrode, ultrasonic transducer, booster, etc.), depending on the respective materials thereof (each with its own sound transmission speed), must have dimensions enabling it to resonate at the ultrasonic frequency generated, in order to vibrate such that it transmits a vibration coincident with or multiple of one wavelength, the endmost part or portion of part, i.e., the sonotrode, being the one vibrating with the greatest amplitude.

The passage for air or conduit proposed in EP 1 000 732 has an inlet defined in the sonotrode itself, through a corresponding side pipe, i.e., at a height (from the tip of the sonotrode) smaller than the length of the ultrasonic wave. As has been indicated in the previous paragraph, the sonotrode is the part vibrating with the greatest amplitude. In fact, for the case of the ultrasonic welding of plastics in which the present invention is included, where a large oscillation amplitude (of up to 50 microns) and high frequencies (of 30 kHz or more) are worked with, making an inlet such as the one illustrated and described in EP 1 000 732, i.e., in the sonotrode itself, is materially impossible, since a transverse perforation of such a type would cause the sonotrode to be destroyed or considerably deformed with the vibration of the latter.

In addition, the present applicant is not aware of ultrasonic transducers applicable to heads for the ultrasonic welding of plastics having a cooling conduit therein positioned to be communicated with another cooling conduit defined inside a sonotrode.

### Description of the Invention

It is necessary to offer an alternative to the state of the art, covering the gaps found therein, by means of supplying a head for the ultrasonic welding of plastics which allows cooling both a sonotrode of said head and the immediate welding area of said plastics, allowing working at high frequencies and with large oscillation amplitudes without the sonotrode suffering any damage.

To that end, in a first aspect, the present invention relates to a head for the ultrasonic welding of plastics of the type comprising an ultrasonic transducer assembly, such as a piezoelectric converter, provided for generating a vibration at a predetermined ultrasonic frequency, to which there are removably joined or coupled one or more end parts, each of which forms or includes at least one sonotrode, provided to vibrate at said ultrasonic frequency according to a direction which can be oriented in relation to the working area and generally perpendicular to plastics to be welded arranged under a free end of said end part, said head having a connection to an external source of cooling fluid, said end part internally defining at least one first conduit running through the inside of at least part of the end part, inside which said cooling fluid circulates, and which exits to the exterior through said free end so that the cooling fluid circulating therethrough is projected onto the welding area of said plastics for the purpose of cooling said welding area.

Unlike the proposal made in EP 1 000 732, the head proposed by the invention comprises a second conduit communicating said first conduit with said connection, and the inlet of which is arranged at a distance from the free end of the end part, taken according to said axis defining said vibration direction, greater than the length of the end part or than the length of an end portion of the end part provided for vibrating such that it transmits a vibration of one wavelength at said predetermined ultrasonic frequency. The location of said inlet has been provided preventing it from coinciding inside the part of the welding head vibrating at a greater amplitude, i.e., the sonotrode or an end portion of said end part functioning as a sonotrode, where there is a vibration of one wavelength, for the purpose of offering safety assurances against the breaking of all the parts forming the welding head.

The mentioned end part and said ultrasonic transducer are sized, depending on the respective materials from which they are manufactured, so that they resonate at said predetermined ultrasonic frequency, vibrating such that they transmit a vibration of one wavelength or of a multiple of one wavelength. If they are not thus sized, they would not go into resonance with the generated ultrasonic frequency.

For a preferred embodiment said end part is a sonotrode and said first conduit is a through conduit which, unlike the conduit proposed in EP 1 000 732, runs longitudinally through the inside of the entire sonotrode, traversing it.

For one embodiment of the head proposed by the first aspect of the invention the sonotrode included therein has a main body adapted for coupling different interchangeable tips thereto, selected depending on the application. Obviously the dimensions which must enable the vibration in resonance with the predetermined ultrasonic frequency are those of the complete sonotrode, i.e., once one of said interchangeable tips has been coupled to the main body, for example by means of a threaded connection.

For one embodiment, said first conduit runs parallel to the axis defining said perpendicular direction of the vibration movement, although other non-parallel paths are also contemplated in the present invention.

For an alternative embodiment said end part is sized, depending on the material from which it is manufactured, so that it resonates at said predetermined ultrasonic frequency, vibrating such that it transmits a vibration of two or more wavelengths, and includes in an integrated manner a first end portion forming a sonotrode, and a second portion forming an adapter functioning as a coupling part or as an oscillation amplitude modifier, each of said portions being sized to vibrate such that it transmits a vibration of at least one respective wavelength of said two or more wavelengths.

For another embodiment the head comprises one or more adapters intercalated between the transducer and the sonotrode, said adapter being, unlike the adapter of the embodiment described in the previous paragraph, a part independent from the one forming the sonotrode but coupled thereto. Said adapter is commonly referred to as a coupling part when it does not modify the vibration amplitude, or booster or amplitude modifier when it does (either increasing or decreasing the oscillation amplitude), and must also be sized, depending on the material from which it is manufactured, so that it resonates at said predetermined ultrasonic frequency, vibrating such that it transmits a vibration of one wavelength or of a multiple of one wavelength.

The mentioned adapter is provided to vibrate at said ultrasonic frequency together with the sonotrode along a common direction. For said embodiment the mentioned second conduit runs through at least part of the adapter.

For one embodiment the mentioned inlet of the second conduit is the inlet of a side pipe defined in said adapter transversely to said axis defining said vibration direction, and communicated with the second conduit. For said embodiment said inlet of the second conduit and said side pipe is arranged close to the nodal area of the adapter (generally at less than 20 mm from it).

In order for the cooling fluid to be projected towards the welding area regardless of whether or not the sonotrode is operating, the first conduit of the proposed head has along its entire length a section or sections with a sufficient diameter to prevent a capillarity phenomenon occurring therein which stops the exit of the fluid to the exterior.

For one embodiment the first conduit is communicated with the second one through one or more joining elements for joining the end part forming or including the sonotrode with said piezoelectric converter assembly.

For another embodiment said second conduit extends through part or preferably the whole of said piezoelectric converter, which is aligned with the end part, until being communicated with said fluid supply connection.

It has been provided that a pressurized casing surrounds the piezoelectric converter assembly, the cooling fluid penetrating towards the conduit through an end or through one or more side pipe ducts. For said embodiment said side pipe and pipes are arranged close to the nodal area of the transducer (generally at less than 20 mm from it).

Generally at least one part of said intermediate portion of the end part has a decreasing variable section, the outlet of said passage or passages being defined in said part with a variable section of the intermediate portion.

For the purpose of directing the cooling fluid coming from said passage or passages towards said area adjacent to the welding area, for one embodiment the head proposed by the invention comprises a part or flap coupled to the end part above the outlet of said passages and extending towards said free end of the sonotrode.

Said passage or passages describe an inclined path in relation to the axis defining the vibration direction, for the purpose of ensuring the structural integrity of the end part.

Said flap is generally coupled at one end to a coupling configuration, such as a perimetric groove, of said portion of the end part with a larger section, said flap not contacting the working area to prevent it from breaking due to the blows against the working area.

For a preferred embodiment the ultrasonic converter assembly of the head proposed by the first aspect of the present invention comprises the following elements aligned:
- a part, or cap, with a first end portion or tip coupled to the end part (directly or with the interpolation of an adapter), a second end portion and an intermediate portion defining a fastening ring,
- at least two piezoelectric plates electrically connectable to two respective electric terminals, one of them positive and the other one negative, of a generator or power supply source, and
- a countermass joined at a first end to said second end portion of said part by means of at least one joining element traversing said piezoelectric plates, which are trapped between said cap and said countermass.

For one embodiment the first conduit extends through said joining element which joins said part with said countermass.

For one embodiment the conduit resulting from communicating both the first and second conduits is a through channel (or channels where appropriate) running through the inside of the entire head axially or according to a direction parallel to the longitudinal axis of the head.

In relation to the cooling fluid, it comprises, depending on the embodiment, gas or gases, such as those contained in air, and/or liquid, although preferably it is only air.

A second aspect of the invention relates to an ultrasonic transducer for a head for the ultrasonic welding of plastics, provided to generate a vibration at a predetermined ultrasonic frequency, and which is couplable to at least one end part forming or including at least one sonotrode, provided to vibrate at said predetermined ultrasonic frequency according to a direction which can oriented in relation to a working surface where there are plastics to be welded under a free end of said end part, said end part internally defining at least one first conduit running through the inside of the end part, traversing it, for the circulation of a cooling fluid coming from an external source couplable to a connection of said head, and exiting to the exterior through at least said free end so that the cooling fluid circulating therethrough is projected at least onto the welding area of said plastics.

The ultrasonic transducer proposed by the second aspect of the invention comprises a second conduit running through at least part of its inside and positioned to be communicated with the first conduit of said end part when the transducer and the end part are coupled to one another, to communicate the first conduit with said connection, and therefore with the cooling fluid.

The part referring to the ultrasonic transducer incorporated in the ultrasonic head proposed by the first aspect of the invention of the different embodiments described above and of those which will be described in a subsequent section (with reference to the attached figures) are applicable to corresponding embodiments of the ultrasonic transducer proposed by the second aspect of the invention.

For one embodiment the use of suitable materials and an effective design which allows obtaining the transducer proposed by the second aspect of the invention, suitable for generating ultrasonic waves with such an oscillation amplitude that they allow dispensing with intermediate amplitude modifiers, and therefore directly connecting the transducer to sonotrode, for a wide range of applications, are contemplated.

### Brief Description of the Drawings

The previous and other advantages and features will be more fully understood from the following detailed description of several embodiments with reference to the attached drawings, which must be considered in an illustrative and non-limiting manner, in which:
Figure 1 is an elevational view of the head for the ultrasonic welding of plastics proposed by the invention for one embodiment,
Figure 2 is a view of a section of the head of Figure 1, made through the plane indicated as A-A in said Figure 1,
Figure 3 is an elevational view of the head for the ultrasonic welding of plastics proposed by the invention for another embodiment,
Figure 4 is a view of a section of the head of Figure 3, made through the plane indicated as A-A in said Figure 3,
Figure 5 is an elevational view of the head for the ultrasonic welding of plastics proposed by the invention for another embodiment,
Figure 6 is a view of a section of the head of Figure 5, made through the plane indicated as A-A in said Figure 5,
Figure 7 is an elevational view of the head for the ultrasonic welding of plastics proposed by the invention for another embodiment,
Figure 8 is a view of a section of the head of Figure 7, made through the plane indicated as A-A in said Figure 7,
Figure 9 is an elevational view of the head for the ultrasonic welding of plastics proposed by the invention for another embodiment including an arrangement which allows cooling a cooling gas just before projecting it onto the welding area,
Figure 10 is a view of a section of the head of Figure 9, made through the plane indicated as A-A in said Figure 9,
Figure 11 is an elevational view of the head for the ultrasonic welding of plastics proposed by the invention for another embodiment, where the end part of the head integrates a sonotrode and an adapter, in this case functioning as a coupling part, and
Figure 12 is a view of a section of the head of Figure 11, made through the plane indicated as A-A in said Figure 11.

### Detailed Description of Several Embodiments

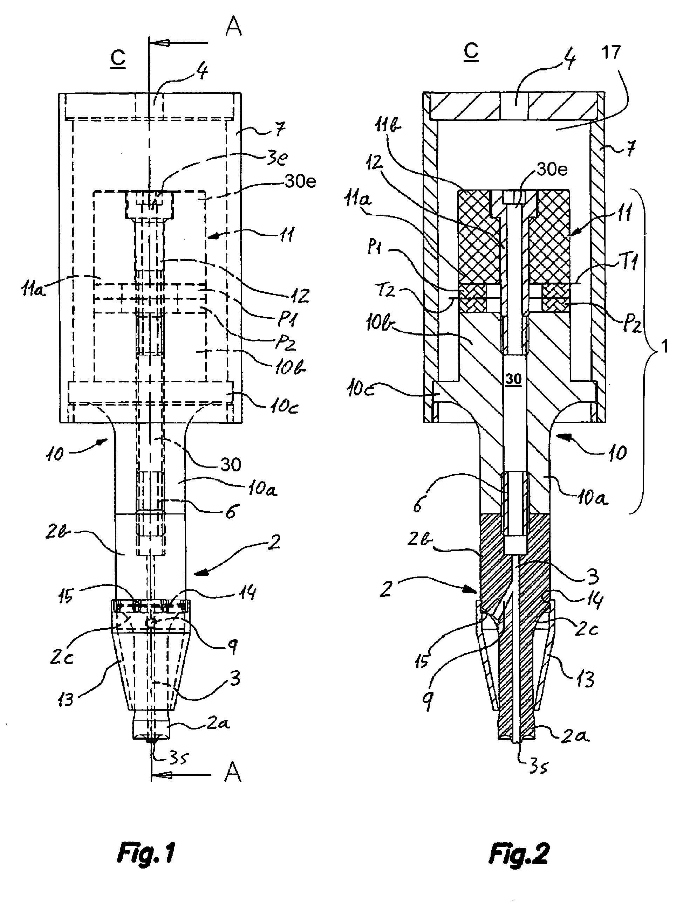

As observed in Figures 1 to 6, the present invention relates, in a first aspect, to a head C for the ultrasonic welding of plastics comprising an ultrasonic transducer 1 to which there is directly coupled in a removable manner a sonotrode 2 provided to vibrate at a predetermined ultrasonic frequency, generated by the transducer 1, according to a direction which can be oriented (generally perpendicularly) in relation to a working surface where there are plastics (not shown) to be welded arranged under a free end 2a of said sonotrode 2.

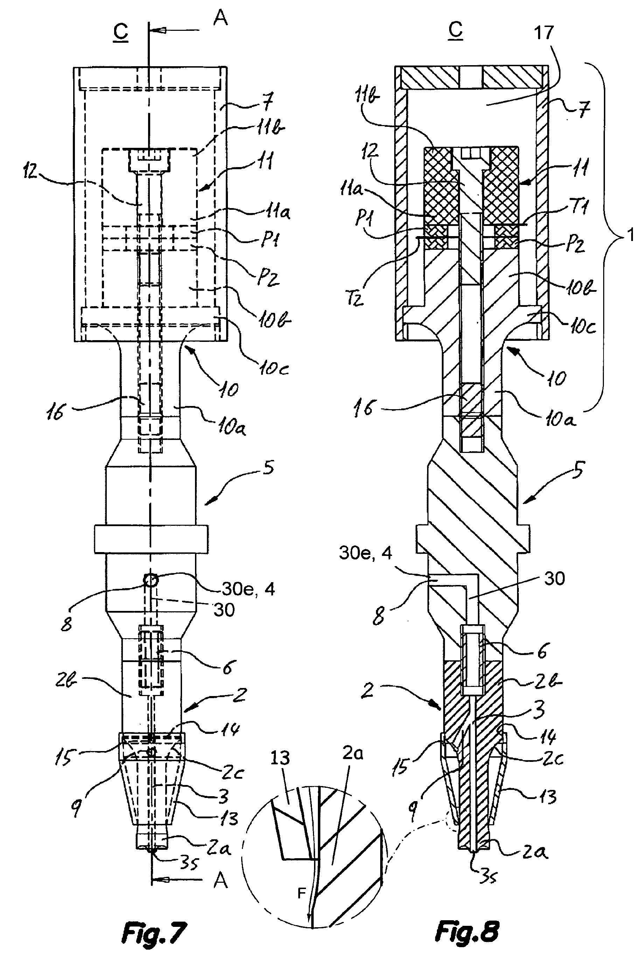

For the embodiments of Figures 7, 8, 9 and 10 the ultrasonic transducer 1 is joined to a sonotrode 2, not directly but through an intermediate adapter 5 intercalated between said ultrasonic transducer 1 and said sonotrode 2, and provided to vibrate at said predetermined ultrasonic frequency together with the sonotrode along a common direction.

The mentioned adapter 5 is commonly known as a coupling part when it does not modify the oscillation amplitude or as a booster or amplitude modifier when it does. Specifically, the adapter 5 shown in Figures 7 to 10 does not modify the oscillation amplitude, since its inlet (upper) section is equal to its outlet section (the one coupled to the sonotrode 2), but any other type of adapter which does act as a booster is also contemplated by the present invention.

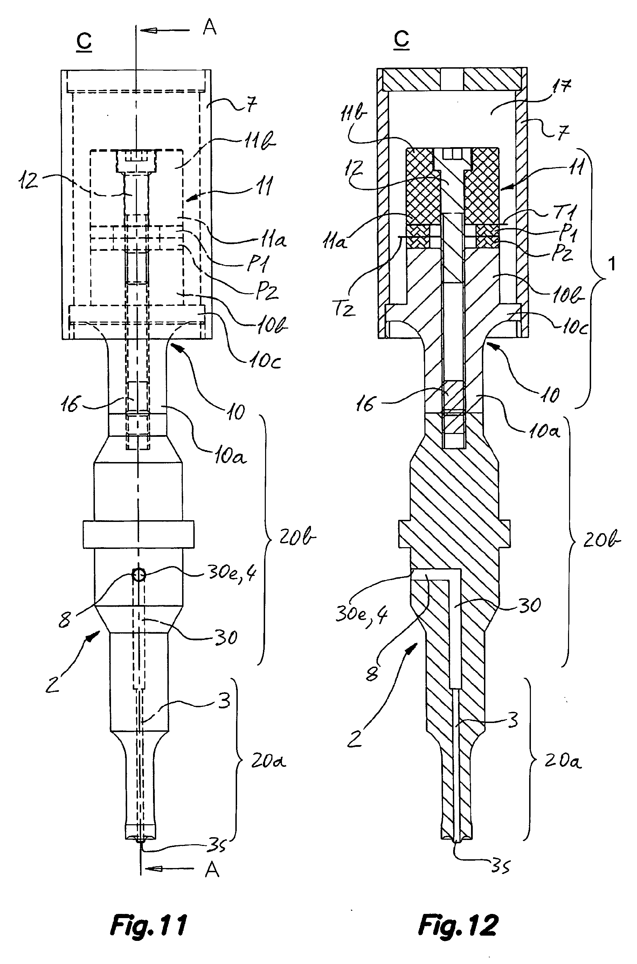

Figures 11 and 12 show another embodiment for which the ultrasonic transducer 1 is directly coupled to an end part 2 sized, depending on the material from which it is manufactured, so that it resonates at said predetermined ultrasonic frequency, vibrating such that it transmits a vibration of two wavelengths. The end part 2 of Figures 11 and 12 includes in an integrated manner a first end portion 20a forming a sonotrode, and a second portion 20b forming an adapter functioning as a coupling part (or for another embodiment which is not shown, functioning as an oscillation amplitude modifier), each of said portions 20a, 20b being sized to vibrate such that it transmits a vibration of one wavelength.

The sonotrode 2 or the end portion 20a forming a sonotrode, depending on the embodiment, internally defines a first conduit 3 for the circulation of a cooling fluid of the sonotrode 2, and said head C has a connection 4 to an external cooling fluid source (not shown) for supplying fluid to said first conduit 3, which depending on the embodiment is located in one element of the head C or another.

As can also be seen in all the attached figures, the first conduit 3 is a through conduit 3 running through the inside of the sonotrode 2 (or of the end portion 20a forming a sonotrode for the embodiment of Figures 11 and 12), completely traversing it, parallel to the axis defining said vibration direction, and exiting to the exterior through at least one main outlet 3s arranged at said free end 2a, so that the cooling fluid circulating therethrough is projected at least onto the welding area of said plastics for the purpose of also cooling said welding area.

In all the attached figures it can also be seen how the head proposed by the invention comprises a second conduit 30 communicating said first conduit 3 with said connection 4, the inlet 30e of said second conduit 30, or fluid inlet 30e, being arranged at a distance greater than the length of the end part 2, when the latter forms a sonotrode 2, as shown in Figures 1 to 10, or than the length of an end segment 20a of the end part 2 provided to vibrate such that it transmits a vibration of one wavelength at the predetermined ultrasonic frequency, for the case shown by Figures 11 and 12.

The mentioned fluid inlet 30e is arranged in one location or another, depending on the embodiment.

The mentioned conduits 3, 30 are communicated through a joining element 6 for joining the sonotrode 2 with said ultrasonic transducer 1 (see Figures 1 to 6) or with said adapter 5 (see Figures 7, 8, 9 and 10), depending on the embodiment.

For the embodiment of Figures 11 and 12, in contrast, both conduits 3, 30 are directly communicated with one another, being able to have different sections, as shown in said Figures 11 and 12, or have one and the same section.

Although the present invention is applicable for different types of ultrasonic transducers, for the embodiments shown by the attached figures, the ultrasonic transducer 1 is a piezoelectric converter assembly comprising the following elements aligned, which elements can especially be seen in Figures 2, 4, 6, 8, 10 and 12:
- a part 10, or cap, with a first end portion or tip 10a directly coupled to the sonotrode 2 in the embodiments of Figures 2, 4 and 6, or directly coupled to the adapter 5 for the embodiment of Figure 8, with a second end portion 10b and with an intermediate portion 10c defining a generally ring-shaped fastening member,
- two stacked piezoelectric plates P1, P2, electrically connected to two respective electric terminals T1, T2, one of them positive and the other one negative, of a power supply source (not shown), and
- a countermass 11 joined at a first end 11a to said second end portion of said cap 10 by means of a joining element 12 traversing said piezoelectric plates P1, P2, which are trapped between said cap 10 and said countermass 11.

For the embodiments shown by Figures 1 to 6, the second conduit 30 extends through at least part of the ultrasonic transducer 1, which is aligned with the sonotrode 2.

For the embodiment of Figures 3 and 4, due to the fact that the joining element 12 is not hollow, the second conduit 30 extends to the tip of the joining element 12, although for another embodiment it could extend to before the tip of the joining element 12.

In contrast, for the embodiments shown by Figures 1, 2, 5, 6, 9 and 10 the second conduit 30 extends through the joining element 12 (which in the embodiments shown is a screw 12) which joins the cap 10 with the countermass 11, the second conduit 30 extending through the entire ultrasonic transducer assembly 1 to its inlet 30e coinciding with the end of the joining element 12.

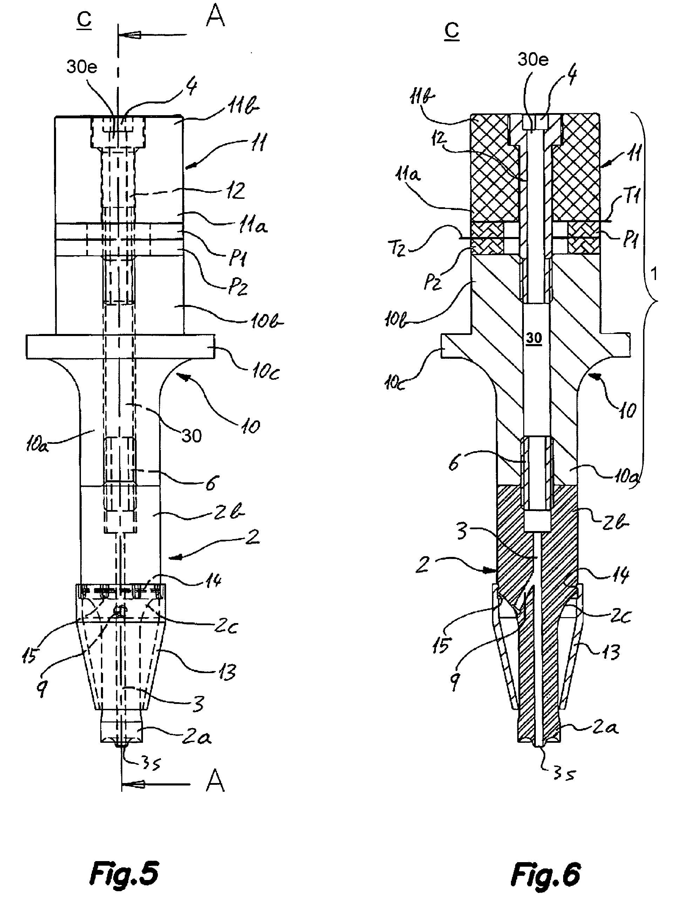

In Figures 5 and 6 said inlet 30e of the second conduit 30 defines the mentioned fluid supply connection 4.

In contrast, in the embodiments shown by Figures 1, 2, 3, 4, 9 and 10, the fluid supply connection 4 is defined in an upper wall of a casing 7 covering the ultrasonic transducer 1, the inside of which forms a pressurized chamber 17 for said cooling fluid interposed between the second conduit 30 and said connection 4 to transfer the mentioned cooling fluid towards the inlet 30e of the second conduit 30, and therefore towards the first conduit 3.

For the embodiment shown by Figures 1, 2, 9 and 10, the inlet 30e of the second conduit 30 and said connection 4 are aligned according to the axis defining the vibration direction and both of them open out in said pressurized chamber 17.

For the embodiment shown by Figures 3 and 4, the inlet 30e of the second conduit 30 is the inlet of a side pipe 8 (close to the nodal area) for the cooling fluid defined in the body of the ultrasonic transducer 1 transversely to said axis defining said vibration direction, communicated with the second conduit 30, and which opens out inside said pressurized chamber 17, such that the cooling fluid is transferred towards the mouth of the side pipe 8 forming the inlet 30e of the second conduit 30.

In the embodiment shown by Figures 7, 8, 11 and 12, the head C shown therein also has a side pipe 8 the mouth of which forms the inlet 30e of the second conduit 30, but in this case said side pipe 8 is defined in the adapter 5 (Figures 7 and 8) or portion 20b functioning as an adapter (Figures 11 and 12), close to the nodal area, transversely to said axis defining said vibration direction, and communicated with the second conduit 30.

In said embodiments the inlet 30e also forms the cooling fluid supply connection 4.

Although the casing 7 has also been shown in said Figures 7, 8, 11 and 12, such casing is not necessary as the connection 4 is arranged outside the casing 7.

As has been mentioned in Figures 3, 4, 7, 8, 11 and 12, it can be seen how the side pipes 8 shown therein are arranged in an area close to the respective nodal areas of the ultrasonic transducer (Figures 3 and 4), of the adapter 5 (Figures 7 and 8) and of the portion 20b functioning as an adapter (Figures 11 and 12), as it is in the nodal areas where the vibration is less (ideally nil), therefore the perforation in areas close thereto are less damaging for the purpose of ensuring the integrity of the ultrasonic transducer 1, of the adapter 5 or of the segment 20b functioning as an adapter.

As can be seen in Figures 1 to 8, for the embodiments shown therein the sonotrode 2 has a portion 2b with a section larger than the section of its free end 2a, and an intermediate portion 2c with a passage 9 with an outlet to the exterior and communicated with the first conduit 3, so that the cooling fluid circulating therethrough is projected onto an area adjacent to said welding area. Said passage 9 describes an inclined path in relation to the axis defining the vibration direction, for the purpose of ensuring the structural integrity of the end part 2.

In the figures it can be seen how part of said intermediate portion 2c of the sonotrode 2 has a decreasing variable section, the outlet of said passage 9 being defined in said part with a variable section of the intermediate portion 2c.

For other embodiments which are not shown, the intermediate portion 2c of the sonotrode 2 comprises more than one passage 9 communicated with the first conduit 3, or conduits where appropriate.

For the purpose of directing the cooling fluid coming out of the passage 9 towards said area adjacent to the welding area, the head proposed by the invention comprises a part, skirt or flap 13 coupled to the sonotrode 2 above the outlet of the passage 9, and extending towards the free end 2a of the sonotrode 2, for the purpose of directing the cooling fluid coming from said passage 9 towards the area adjacent to the welding area, according to the arrow F shown in the enlarged detail of Figure 8 which shows part of the lower portion of the flap 13 and part of the free end 2a of the sonotrode 2.

Said flap is generally coupled at one end to a coupling configuration 14, such as the perimetric groove 14 shown in the figures, of the portion with a larger section 2b of the sonotrode 2, through a respective coupling configuration 15, which in the figures comprises a series of flanges 15.

In Figures 1 to 8 it can be seen how said flap 13 does not extend to the free end 2a of the sonotrode 2, for the purpose of not contacting the working area to prevent the flap 13 from breaking by the blows against the material to be welded.

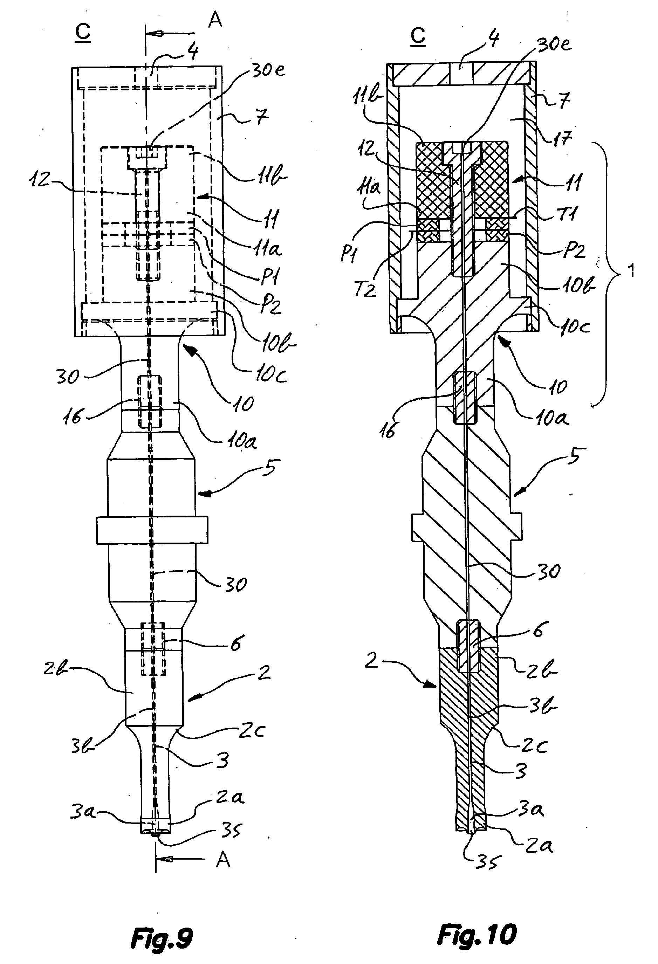

Figures 9 and 10 show an embodiment using one or more gases, preferably air, as a cooling fluid, for which the first conduit 3 has two segments 3a, 3b with sections different from one another, the segment with a larger section 3a opening out to the exterior through the free end 2a of the sonotrode 2, so that the gas or gases circulating through the segment with a smaller section 3b expand upon circulating through the segment with a larger section 3a, the temperature of the gas or gases forming the cooling fluid thus decreasing just before they are projected onto the welding area of said plastics, thus improving the cooling thereof.

The present invention also relates, in a second aspect, to an ultrasonic transducer for a head for the ultrasonic welding of plastics, with a second conduit 30 running through at least part of its inside and positioned to communicate with the first conduit 3 of the end part 2 when the transducer 1 and the end part 2 are coupled to one another, to communicate the first conduit 3 with said connection 4.

The part referring to the ultrasonic transducer incorporated in the ultrasonic head proposed by the first aspect of the invention of the different embodiments described above with reference to the attached figures are applicable to corresponding embodiments of the ultrasonic transducer proposed by the second aspect of the invention.

A person skilled in the art could introduce changes and modifications in the embodiments described without departing from the scope of the invention as it is defined in the attached claims.

## Claims

1. A head for the ultrasonic welding of plastics of the type comprising an ultrasonic transducer (1) provided to generate a vibration at a predetermined ultrasonic frequency, to which there is coupled or joined at least one end part (2) forming or including at least one sonotrode, said end part (2) and said ultrasonic transducer (1) being sized, depending on the respective materials from which they are manufactured, so that they resonate at said predetermined ultrasonic frequency, vibrating such that they transmit a vibration of one wavelength or of a multiple of one wavelength, said end part (2) being provided to vibrate at said predetermined ultrasonic frequency according to a direction which can be oriented in relation to a working surface where there are plastics to be welded arranged under a free end (2a) of said at least one end part (2), said head (C) having a connection (4) to an external cooling fluid source, said end part (2) internally defining at least one first conduit (3) running through the inside of at least part of the end part (2), through the inside of which said cooling fluid circulates, and which exits to the exterior through at least said free end (2a) so that the cooling fluid circulating therethrough is projected at least onto the welding area of said plastics, said head being **characterised in that** it comprises a second conduit (30) communicating said first conduit (3) with said connection (4), the inlet (30e) of said second conduit (30) being arranged at a distance from the free end (2a) of the end part (2), taken according to an axis defining said vibration direction, greater than length of said end part (2) or than length of an end portion or sector (20a) of said end part (2) provided to vibrate such that it transmits a vibration of one wavelength at said predetermined ultrasonic frequency.

2. The head according to claim 1, **characterized in that** said at least one end part (2) is a sonotrode (2), and **in that** said first conduit (3) is a through conduit (3) running through the inside of the sonotrode (2), traversing it.

3. The head according to claim 1, **characterized in that** said at least one end part (2) is sized, depending on the material from which it is manufactured, so that it resonates at said predetermined ultrasonic frequency, vibrating such that it transmits a vibration of two wavelengths, and includes in an integrated manner a first end portion or sector (20a) forming a sonotrode, and a second portion or sector (20b) forming an adapter functioning as a coupling part or as an oscillation amplitude modifier, each of said portions (20a, 20b) being sized to vibrate such that it transmits a vibration of one wavelength.

4. The head according to claim 1, 2 or 3, **characterized in that** said first through conduit (3) runs through the inside of the end part (2) with at least one segment parallel to the axis defining said vibration direction.

5. The head according to any of the previous claims, **characterized in that** it comprises an adapter (5) functioning as a coupling part or as an amplitude modifier, intercalated between said ultrasonic transducer (1) and said end part (2), said adapter (5) being sized, depending on the material from which it is manufactured, so that it resonates at said predetermined ultrasonic frequency, vibrating such that it transmits a vibration of one wavelength or of a multiple of one wavelength, together with the end part (2) along a common direction, and said second conduit (30) running through at least part of the adapter (5).

6. The head according to any of the previous claims, **characterized in that** said conduits (3, 30) are communicated through at least one joining element (6) for joining the at least one end part (2) with said ultrasonic transducer (1) or with said adapter (5).

7. The head according to claim 5 or 6, **characterized in that** said inlet (30e) of the second conduit (30) is the inlet of a side pipe (8) defined in said adapter (5) transversely to said axis defining said vibration direction, and communicated with the second conduit (30).

8. The head according to claim 3, **characterized in that** said first conduit (3) runs through the inside of said first portion (20a) of the end part (2), said second conduit (30) runs through the inside of said second portion (20b), and **in that** said inlet (30e) of the second conduit (30) is the inlet of a side pipe (8) defined in said second portion (20b) transversely to said axis defining said vibration direction, and communicated with the second conduit (30).

9. The head according to any of claims 1 to 6, **characterized in that** said second conduit (30) extends through at least part of said ultrasonic transducer (1), which is aligned with the end part (2).

10. The head according to claim 9, **characterized in that** said second conduit (30) extends through the entire ultrasonic transducer assembly (1).

11. The head according to one of claims 9 or 10, **characterized in that** it comprises a casing (7), covering said ultrasonic transducer (1), the inside of which forms a pressurized chamber (17) for said cooling fluid interposed between the second conduit (30) and said connection (4) to transfer said cooling fluid towards said inlet (30e) of said second conduit (30).

12. The head according to claim 11, **characterized in that** said inlet (30e) of the second conduit (30) and said connection (4) are aligned according to said axis defining said vibration direction and both of them open out in said pressurized chamber (17).

13. The head according to claim 11, **characterized in that** said inlet (30e) of the second conduit (30) is the inlet of a side pipe (8) defined in the body of said ultrasonic transducer (1) transversely to said axis defining said vibration direction, communicated with the second conduit (30), and which opens out inside said pressurized chamber (17).

14. The head according to any of the previous claims, **characterized in that** said connection (4) is arranged at an upper part of said ultrasonic transducer (1).

15. The head according to any of the previous claims, **characterized in that** said end part (2) has a portion (2b) with a section larger than the section of said free end (2a), an intermediate portion (2c) of the end part (2) joining said portion with a larger section (2b) with the free end (2a) having at least one passage (9) with an outlet to the exterior and communicated with said at least one conduit (3), so that the cooling fluid circulating therethrough is projected onto at least one area adjacent to said welding area.

16. The head according to claim 15, **characterized in that** at least part of said intermediate portion (2c) of the end part (2) has a decreasing variable section, the outlet of said at least one passage (9) being defined in said part with a variable section of the intermediate portion (2c).

17. The head according to claim 15 or 16, **characterized in that** it comprises a part or flap (13) coupled to said end part (2) above the outlet of said at least one passage (9) and extending towards said free end (2a) of the end part (2), for the purpose of directing the cooling fluid coming from said at least passage (9) towards said area adjacent to the welding area.

18. The head according to claim 14, 15 or 16, **characterized in that** said at least one passage (9) describes an inclined path in relation to said axis defining said vibration direction.

19. The head according to claim 10, **characterized in that** said ultrasonic transducer (1) is a piezoelectric converter assembly comprising the following elements aligned:
- a part (10), or cap (10), with a first end portion or tip (10a) coupled to the end part (2), a second end portion (10b) and an intermediate portion (10c) defining a fastening member,
- at least two stacked piezoelectric plates (P1, P2), electrically connected to two respective electric terminals (T1, T2) connected to respective output terminals, one of them positive and the other one negative, of a power supply source, and
- a countermass (11) joined at a first end (11a) to said second end portion of said cap (10) by means of at least one joining element (12) traversing said piezoelectric plates (P1, P2), which are trapped between said cap (10) and said countermass (11).

20. The head according to claim 19, **characterized in that** said second conduit (30) extends through said at least one joining element (12), which joins said cap (10) with said countermass (11).

21. The head according to any of the previous claims, **characterized in that** said communicated conduits (3, 30) form a channel running axially through the inside of the entire head (C).

22. The head according to claim 1, **characterized in that** said cooling fluid comprises at least one gas.

23. The head according to claim 22, **characterized in that** said cooling fluid comprises at least air.

24. The head according to claim 1, 23 or 24, **characterized in that** said cooling fluid comprises at least one liquid.

25. The head according to claim 22 or 23, **characterized in that** at least said first conduit (3) has at least two segments (3a, 3b) with sections different from one another, the segment with a larger section (3a) opening out to the exterior through said free end (2a) of the end part (2), so that the gas or gases circulating through the segment with a smaller section (3b) expand upon circulating through the segment with a larger section (3a), the temperature of the gas or gases forming the cooling fluid thus decreasing just before they are projected onto the welding area of said plastics.

26. An ultrasonic transducer for a head for the ultrasonic welding of plastics, of the type which is provided to generate a vibration at a predetermined ultrasonic frequency, and which is couplable to at least one end part (2) forming or including at least one sonotrode, provided to vibrate at said predetermined ultrasonic frequency according to a direction which can be oriented in relation to a working surface where there are plastics to be welded arranged under a free end (2a) of said at least one end part (2), said end part (2) internally defining at least one first conduit (3) running through the inside of the end part (2), traversing it, for the circulation of a cooling fluid coming from an external source couplable to a connection (4) of said head (C), and which exits to the exterior through at least said free end (2a) so that the cooling fluid circulating therethrough is projected at least onto the welding area of said plastics, said ultrasonic transducer being **characterized in that** it comprises a second conduit (30) running through at least part of its inside and positioned to be communicated with said first conduit (3) of said end part (2) when the transducer (1) and the end part (2) are coupled to one another, to communicate the first conduit (3) with said connection (4).

27. The ultrasonic transducer according to claim 26, **characterized in that** said second conduit (30) is a through conduit, an inlet (30e) of the second conduit (30) being arranged in an upper face of the transducer (1) opposite a lower face at which the transducer (1) is couplable to said end part (2).

28. The ultrasonic transducer according to claim 26, **characterized in that** it comprises a side pipe (8) defined in the body of said ultrasonic transducer (1) transversely to said axis defining said vibration direction, communicated with the second conduit (30), and the inlet of which forms the inlet (30e) of the second conduit (30).

29. The ultrasonic transducer according to claim 26, 27 or 28, **characterized in that** it is a piezoelectric converter assembly comprising the following elements aligned:
- a part (10), or cap (10), with a first end portion or tip (10a) couplable to the end part (2), a second end portion (10b) and an intermediate portion (10c) defining a fastening member,
- at least two stacked piezoelectric plates (P1, P2), electrically connected to two respective electric terminals (T1, T2) connectable to two respective output terminals, one of them positive and the other one negative, of a power supply source, and
- a countermass (11) joined at a first end (11a) to said second end portion of said cap (10) by means of at least one joining element (12) traversing said piezoelectric plates (P1, P2), which are trapped between said cap (10) and said countermass (11).

30. The ultrasonic transducer according to claim 29, **characterized in that** said second conduit (30) extends through said at least one joining element (12), which joins said cap (10) with said countermass (11).
